(19) Europäisches Patentamt
European Patent Office
Office européen des brevets

(11) Publication number: **0 429 668 B1**

(12) # EUROPEAN PATENT SPECIFICATION

(45) Date of publication of patent specification: **13.12.95**

(51) Int. Cl.[6]: **C08F 299/06**, B32B 27/30

(21) Application number: **90909358.5**

(22) Date of filing: **14.06.90**

(86) International application number:
**PCT/JP90/00778**

(87) International publication number:
**WO 90/15831 (27.12.90 90/29)**

(54) **SOFT COATED FILM**

(30) Priority: **16.06.89 JP 154239/89**
**31.08.89 JP 225279/89**
**09.11.89 JP 291767/89**

(43) Date of publication of application:
**05.06.91 Bulletin 91/23**

(45) Publication of the grant of the patent:
**13.12.95 Bulletin 95/50**

(84) Designated Contracting States:
**DE FR GB IT**

(56) References cited:
**EP-A- 0 222 680**
**DE-A- 3 914 411**
**JP-A- 6 341 520**
**JP-A-53 112 933**
**JP-A-60 223 815**
**WO-A-86/01153**
**JP-A- 6 339 931**
**JP-A- 6 971 624**
**JP-A-58 132 519**

(73) Proprietor: **DAI NIPPON INSATSU KABUSHIKI KAISHA**
**1-1, Ichigaya-Kaga-cho 1-chome**
**Shinjuku-ku**
**Tokyo 162-01 (JP)**

(72) Inventor: **OGUCHI, K. Dai Nippon Insatsu Kabushiki Kaisha**
**1-1Ichigaya-Kaga-cho 1-chome**
**Shinjuku-ku**
**Tokyo162-01o (JP)**
Inventor: **KOSAKA, Yozo Dai Nippon Insatsu Kabushiki Kaisha**
**1-1, Ichigaya-Kaga-cho 1-chome**
**Shinjuku-ku**
**Tokyo 162-01 (JP)**

(74) Representative: **Müller-Boré & Partner Patentanwälte**
**Grafinger Strasse 2**
**D-81671 München (DE)**

EP 0 429 668 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a soft coat film designed to be bonded to the surfaces of articles such as electrical appliances and furniture and, more particularly, to a soft coat film which is improved in terms of not only moldability and injure recovery but also wear resistance, impact resistance, scuffing resistance, tactile impression and so on.

In recent years, plastic materials including engineering plastics have been widely used as an alternative to metal materials or inorganic materials such as glass by taking advantage of their toughness, processability, etc. However, they must be provided with surface protecting layers due to their inferior surface hardness and scuffing resistance.

According to conventional techniques for making the surfaces of plastics hard, heat-curing resins such as those based on organosiloxane and melamine or polyfunctional polyacrylic photosetting resins have been coated on them, or thin metal films have been formed on them by vacuum deposition, sputtering or other means.

A problem with conventional scuffing-resistant surface protecting layers obtained with heat-curing or photosetting resins, however, is that they are so lacking in flexing properties that they are likely to crack. Thus, when forming surface protecting layers on curved moldings or synthetic resin films, they are still far from satisfactory, since some difficulty is involved in processing them into curved shapes or they crack by flexing. Even when used as surface protecting layers for flat planes, they are disadvantageous in that once injured, they are never restored to the original state or remain seriously damaged. Problems with surface protecting layers formed of thin metal films, on the other hand, are that because of being processed in vacuo, they are of low productivity and have difficulty in being processed into large sizes.

EP-A-0 222 680 discloses a process of producing a cured foamed polymeric composition (comprising for example a polyester urethane acrylate oligomer) characterized by mechanically frothing a radiation-curable composition and curing the frothed composition with radiation. A surfactant, such as a silicone fluid is used to enhance the frothing.

It is, therefore, an object of this invention to provide a soft coat film which is improved not only in terms of moldability and injure recovery but also in terms of scuffing resistance, impact resistance, wear resistance, tactile impression and so on, and can protect the surfaces of plastic, metallic, wooden and other products.

As a result of intensive studies made with tee above object in mind, the present inventors have found that a soft coat film excelling in scuffing resistance, impact resistance, wear resistance, feel and other properties can be obtained by coating a film with a composition containing an urethane acrylate of a specific structure and irradiating that film with ionizing radiations. This finding underlies the present invention.

According to the present invention, there is provided a composition for soil coat films having a soil tactile impression comprising, as essential components, (a) a urethane acrylate having a molecular weight of 500-50,000; and (b) a tactile improver selected from silicone resins, waxes and fluorocarbon resin surfactants, the amount of said tactile improver being in the range of 0.05-15 parts by weight based on 100 parts by weight of the composition, the composition having a glass transition temperature of-150 to 20 °C and an elongation of 30 to 1,000%, after setting.

Further, according to the present invention, there is provided a soil coat film having a soil tactile impression comprising a support film, and a resin layer formed on the support film, the resin layer set by irradiating the above composition.

According to the present invention, there is further provided a method for producing soil coat films having a soil tactile impression, characterized by forming between a support film and a laminating film a composition layer comprising the above essential components, irradiating the thus obtained support film/composition layer/laminating film laminate with ionizing radiation to set the composition in said laminate, and releasing only said laminating film from said laminate.

A further method of the present invention for producing soft coat films having a soil tactile impression is characterized by forming on a support film a composition layer comprising the above essential components, and applying pressure to the thus formed laminate from said composition layer side with a forming roll and irradiating said laminate with ionizing radiation, thereby setting said composition layer.

Further, according to the present invention, there is provided a laminate for use in a method for providing soil coat films wherein the laminate comprises a laminating film, and the above composition layer formed on the laminating film, the composition layer comprising a releasable soil coat film as defined above and an adhesive layer formed on the composition layer.

Figures 1 to 4 each illustrate a general structure of equipment for carrying out the inventive method for making soft coat films.

The soft coat films according to this invention will now be explained in greater detail.

The composition forming the resin layer in the inventive soft coat film is characterized by containing an urethane acrylate consisting of an isocyanate compound having at least two isocyanate groups, a compound having 1-4 hydroxyl groups and a compound having 1-2 hydroxyl groups and 1-5 radically polymerizable unsaturated groups and having a molecular weight of 500-50,000 or an urethane acrylate consisting of an isocyanate compound having at least two isocyanate groups and a compound having 1-4 hydroxyl groups and 1-5 radically polymerizable unsaturated groups and having a molecular weight of 500-50,000.

The isocyanate compounds usable in this invention may include aliphatic or aromatic isocyanate compounds having at least two, particularly 2-3 isocyanate groups a molecule. Illustrative mention is made of tetramethylene diisocyanate, hexamethylene diisocyanate, 2,4-tolylene diisocyanate, 2,6-tolylene diisocyanate, 4,4'-diphenylmethane diisocyanate, 1,5-naphthalene diisocyanate, 1,5-naphthalene diisocyanate, 3,3-dimethyl-4,4'-diphenylene diisocyanate, isophorone diisocyanate, xylylene diisocyanate, 1,3-bis(isocyanatomethyl)cyclohexane, trimethylhexamethylene diisocyanate, hydrogenated 4,4'-diphenylmethane diisocyanate, hydrogenated xylylene diisocyanate and isocyanates represented by the following formulae, which may be used alone or in admixture.

$OCNR_1NCO$,

or

$R_2$-$(NCO)_3$

wherein $R_1$ represents a hydrocarbon group having 4-14 carbon atoms, and $R_2$ has an isocyanurate or trimethylolpropane skeleton.

In addition, the following isocyanate compounds (a)-(g) may be used.

(a)

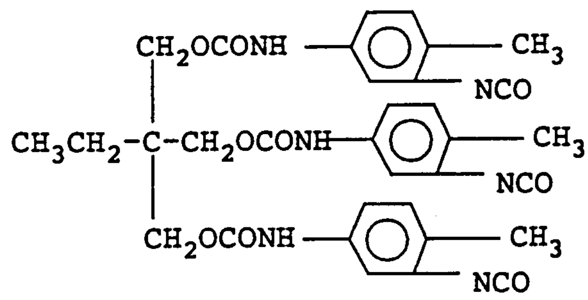

(b)

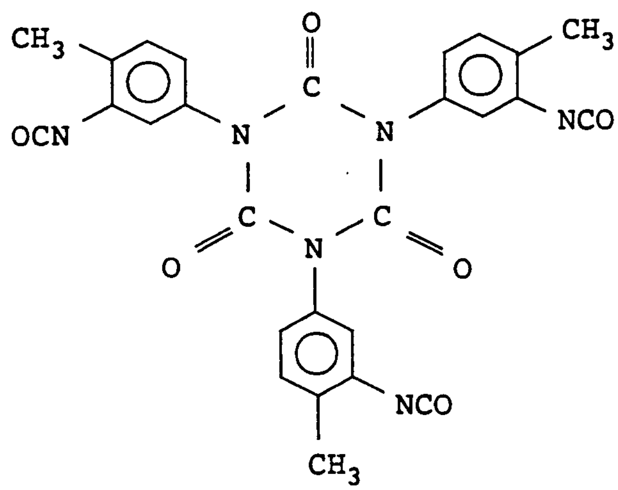

(c)

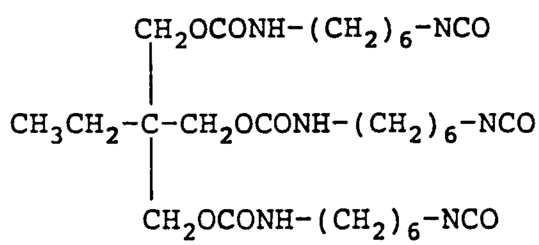

(d)

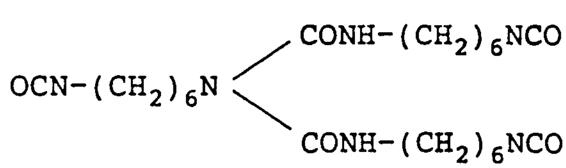

(e)

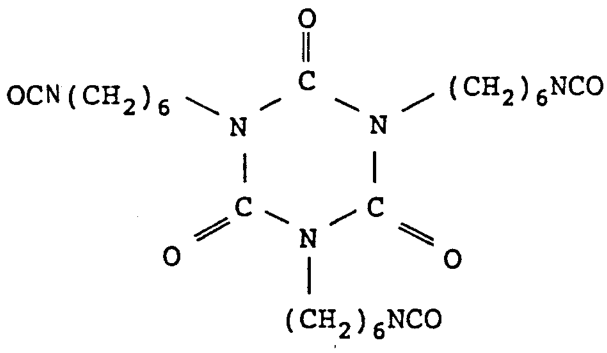

(f)

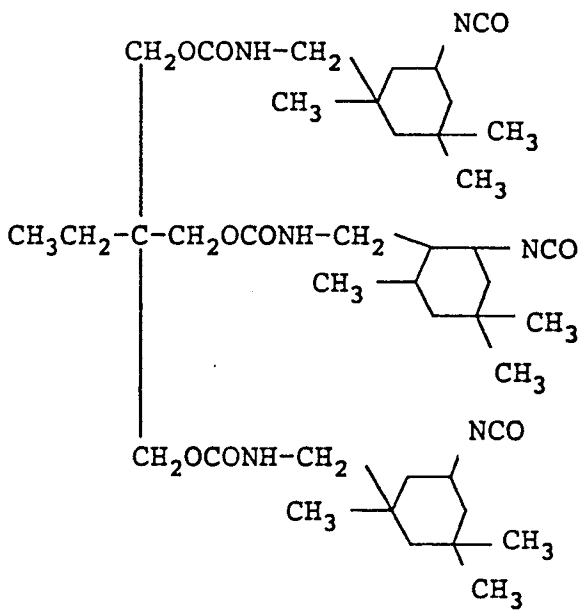

(g)

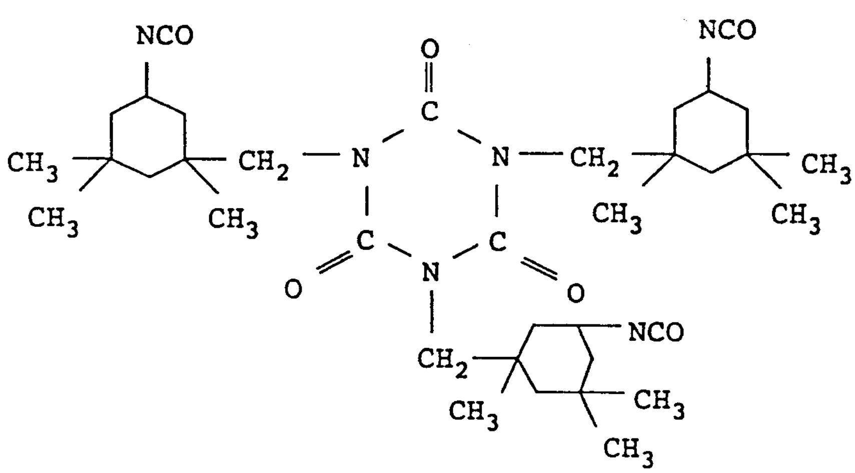

In view of weather resistance in particular, isophorone diisocyanate, hexamethylene diisocyanate, hydrogenated 4,4'-diphenylmethane diisocyanate and hydrogenated xylylene diisocyanate as well as such compounds (d)-(g) as referred to above are desired.

The compounds (monomers) having 1-4 hydroxyl groups, by way of example alone, may include ethanol, propanol, 1,3-butanediol, trimethylolpropane, pentaerythritol and diglycerol as well as polyester,

polyether, polycarbonate and polybutadiene prepolymers having hydroxyl groups.

Included in the polyester prepolymers having 1-4 hydroxyl groups, for instance, are (i) adducts of aromatic or spiro-skeletal diol compounds with lactone compounds or their derivatives or epoxy compounds, (ii) condensates of polybasic acids with polyols and (iii) split polyester compounds derived from ring ester compounds. These prepolymers may be used alone or in combination with two or more.

The aromatic or spiro-skeletal diol compounds used to prepare the adducts (i), for instance, may include:

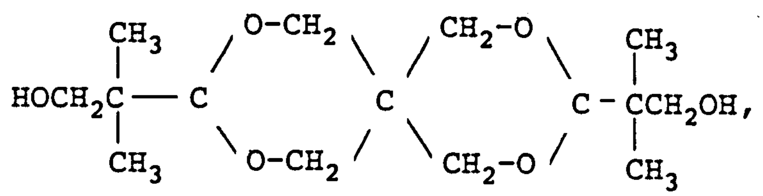

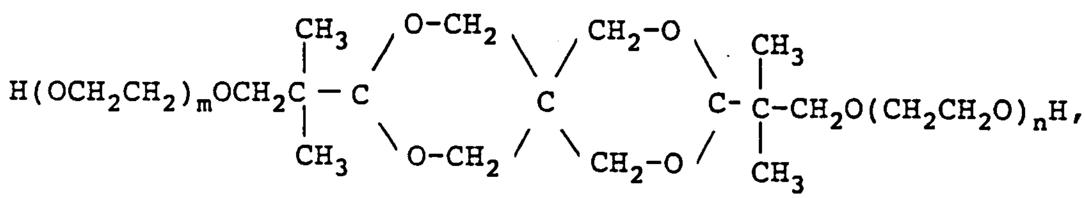

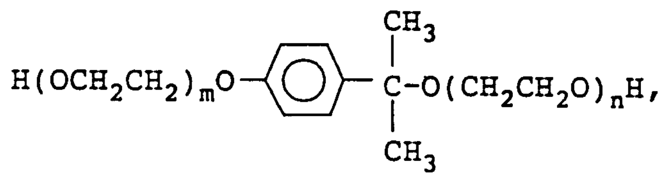

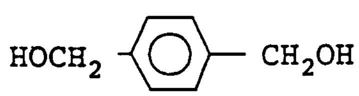

Typical lactone compounds are ϵ-lactone or δ-valerolactone.

Typical epoxy compounds are ethylene oxide or propylene oxide.

Included in the polybasic acids used to obtain the condensates (ii), for instance, are saturated polybasic acids such as phthalic, isophthalic, terephthalic acid, adipic, succinic and sebacic acids or unsaturated polybasic acids such as maleic, fumaric, itaconic and citraconic acids, and embraced in the polyols, for instance, are ethylene glycol, diethylene glycol, 1,4-butanediol and 1,6-hexane glycol.

Included in the polyether prepolymers with 1-4 hydroxyl groups, for instance, are polytetramethylene ether glycol, polyethylene glycol and polypropylene glycol.

As the polycarbonate prepolymers with 1-4 hydroxyl groups, for instance, mention is made of polycarbonate diols such as Prakcel CD-210 (M.W.: 1,000) and Prakcel CD-220 (M.W.: 2,000), both made by Daicel Chemical Industries, Ltd. and DN-983 (M.W.: 1,000) made by Nippon Polyurethane Kogyo K.K.

As the polybutadiene prepolymers, for instance, mention is made of diols having OH groups at both their ends such as 1,4-polybutadiene and 1,2-polybutadiene.

The compounds having 1-2 hydroxyl groups and 1-5 radically polymerizable unsaturated groups or the so-called radically polymerizable compounds allow their unsaturated groups to bond to the isocyanate groups of the isocyanate compounds and generate radicals easily by exposure to electron beams, thereby giving rise to a crosslinking reaction. The radically polymerizable compounds having such hydroxyl groups may be acrylic or methacrylic acid or ester compounds of their derivatives such as (meth)acrylic ester compounds having one polymerizable unsaturated group, e.g. hydroxyethyl acrylate, hydroxypropyl acrylate, hydroxybutyl acrylate, hydroxyethyl methacrylate, hydroxypropyl methacrylate, hydroxybutyl methacrylate, 4-hydroxycyclohexyl acrylate, 5-hydroxycyclooctyl acrylate and 2-hydroxy-3-phenyloxypropyl acrylate. In addition, use may be made of ester compounds having two polymerizable unsaturated groups, e.g. one represented by the following formula:

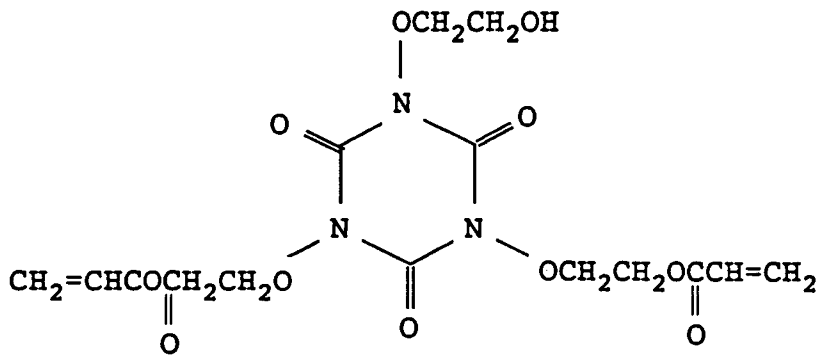

Pentaerythritol triacrylate, dipentaerythritol pentaacrylate and so on may be used as well.

The second urethane acrylate according to this invention is obtainable by allowing an isocyanate compound to react with a compound having 1-4 hydroxyl groups and 1-5 radically polymerizable unsaturated groups, as is the case with the first urethane acrylate, and has a molecular weight of 500-50,000. The aforesaid compound having radically polymerizable unsaturated groups, for instance, may be represented by:

$R(OCH_2CH(OH)CH_2OCOCH=CH_2)_2$

wherein R stands for a hydrocarbon residue.

By way of example alone, how to prepare the aforesaid urethane acrylate using the diisocyanate and diol will now be explained.

The first step at which the diisocyanate is used with the diol having hydroxyl groups at both its ends is expressed by the following reaction scheme:

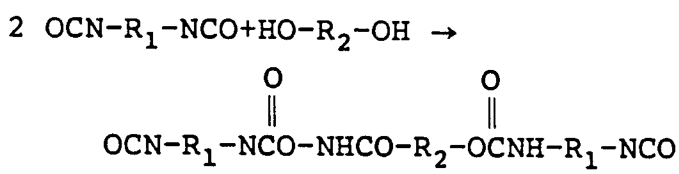

... (1)

wherein $R_1$ stands for a $C_{4-14}$ hydrocarbon group and $R_2$ denotes a diol residue.

The first-step reaction takes place at a temperature of 40-60 °C for 1-4 hours, and may be carried out in the presence or absence of a solvent.

At the second step, an acrylate compound having hydroxyl groups and radically polymerizable unsaturated groups is permitted to react with the terminal of the reaction product obtained at the first step, typically according to the following reaction scheme.

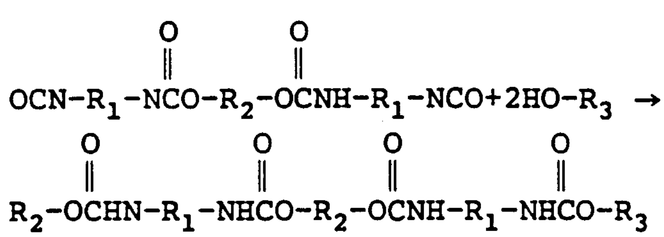

... (2)

wherein $R_3$ stands for an acrylate residue (an acrylic or methacrylic ester group).

It is noted that instead of causing all the isocyanate residues to react with the radically polymerizable compound, its one end may be permitted to react with a triol such as trimethylolpropane to leave three residues of the radically polymerizable compound in one molecule.

The second-step reaction occurs at a temperature of 40-100 °C for 2-6 hours, and may be carried out in the presence or absence of a solvent, as is the case with the first-step reaction.

It is understood that ca. 1,000 ppm of a polymerization inhibitor such as hydroquinone, hydroquinone monomethyl ether, benzoquinone or 2,6-di-t-butyl-p-cresol should preferably be added to the second-step reaction system so as to protect the (meth)acrylic ester group of the radically polymerizable acrylate compound. With a view to accelerating the reaction involved, it may also be possible to add to the reaction system such compounds as triethylamine, piperazine, triethanolamine, dibutyltin dilaurate, stannous octoate, stannous laurate and dioctyltin dilaurate.

The thus obtained urethane acrylate is characterized by having a molecular weight of 500-50,000. Such a high molecular weight derives from the number of repetition of the diisocyanate and diol units or the molecular weight of the compound having hydroxyl groups.

The composition used to produce the soft coat film according to this invention may be obtained by sole use of the urethane acrylate. If desired, however, it may be mixed with one or more or two compounds (esp. acrylic monomers), each having at least one radically unsaturated group a molecule.

Of such acrylic monomers capable of being mixed with the urethane acrylate, the monofunctional acrylic monomers may include acrylic esters such as methyl acrylate, 2-ethylhexyl acrylate, methoxyethyl acrylate, butoxyethyl acrylate, butyl acrylate, methoxybutyl acrylate, phenyl acrylate, ethoxydiethylene glycol acrylate, tetrahydrofurfuryl acrylate, phenoxy acrylate, 2-hydroxypropyl acrylate, methoxyethylene glycol acrylate, acrylic acid dimer, nonyl phenolethylene glycol acrylate, 2-hydroxy-3-phenoxypropyl acrylate, isoamyl acrylate, methoxydipropylene glycol acrylate, 2-acryloyloxyethyl succinate, 2-acryloyloxyethyl-2-hydroxyethyl phthalate, 2-acryloyloxyethyl hexahydrophthalate, 2-acryloyloxyethyl acid phosphate, 2-hydroxybutyl acrylate, benzyl acrylate and nonyl phenol-10-ethylene glycol acrylate or their corresponding methacrylic esters; unsaturated carboxylic acid amides such as acrylamide and methacrylamide; substituted amino-alcohol esters of unsaturated acids such as 2-(N,N-dimethylamino)ethyl acrylate, 2-(N,N-dimethylamino)ethyl methacrylate, 2-(N,N-dipentylamino)ethyl acrylate, (N,N-dimethylamino)methyl methacrylate and 2-(N,N-dimethylamino)propyl acrylate; carbamoyloxyalkyl acrylates such as N-methylcarbamoyloxyethyl acrylate, N-ethylcarbamoyloxyethyl acrylate, N-butylcarbamoyloxyethyl acrylate, N-phenylcarbamoyloxyethyl acrylate, 2-(N-methylcarbamoyloxy)ethyl acrylate and 2-carbamoyloxypropyl acrylate; N-vinyl-2-pyrrolidones; and so on.

The polyfunctional acrylic monomers have at least two radically polymerizable unsaturated groups. In particular, polyfunctional (meth)acrylates having at least two (meth)acryloyl groups are preferred. Illustrative mention is made of polyfunctional (meth)acrylates such as ethylene glycol di(meth)acrylate, polyethylene glycol di(meth)acrylate; hexanediol di(meth)acrylate, trimethylolpropane tri(meth)acrylate, trimethylolpropane di(meth)acrylate, pentaerythritol tetra(meth)acrylate, pentaerythritol tri(meth)acrylate, dipentaerythritol hexa(meth)acrylate, ethylene glycol diglycidyl ether di(meth)acrylate, polyethylene glycol diglycidyl ether di(meth)acrylate, propylene glycol diglycidyl ether di(meth)acrylate, polypropylene glycol diglycidyl ether di(meth)acrylate, sorbitol tetraglycidyl ether tetra(meth)acrylate and melamine (meth)acrylate.

Although depending upon the acrylic component content of the urethane acrylate, the urethane acrylate and acrylic monomer should preferably be used in such a way that the acrylic monomer accounts for about 5-80% by weight of the composition.

It is understood in this connection that an urethane compound may be used in place of the urethane acrylate, as will be described hereinafter, since the urethane acrylate and acrylic monomer are crosslinked together by exposure to ionizing radiations. Usable to this end are urethane compounds obtained by the reaction of isocyanate compounds having at least two isocyanate groups with compounds having 1-4 hydroxyl groups. The isocyanate and hydroxyl-containing compounds used may all be the same as referred to in the foregoing. When using the urethane compound, the urethane compound and acrylic monomer are again used at such a proportion that the acrylic monomer accounts for 20-80% by weight of the composition.

Preferably, the soft coat film according to this invention should contain one or two or more tactile improvers in an amount of 0.05-15 parts by weight per 100 parts by weight of the resinous component so as to impart a good feel i.e., soft tactile impression, thereto.

The tactile improver or improvers, which may be used in liquid or powdery forms, is or are selected from silicone resins, waxes, fluorocarbon resin surfactants such as polytetrafluoroethylene and so on. In too large an amount, however, the improvers are likely to be less adhesive to the support film. Thus, they should preferably be added to the resin in an amount lying in the range of 0.05-10% by weight.

Suitable as the practically used silicone, for instance, are amino, ether or mercapto-modified silicone, OH group-containing silicone and UV or EB setting silicone. The waxes used, for instance, are polyethylene glycol and polytetramethylene glycol. Silicone and wax powders may be used as well.

If required, the resinous composition used in this invention may additionally contain UV absorbers and light stabilizers. Usable as the UV absorbers, for instance, are benzotriazoles such as 2-(2-hydroxy-5-methylphenyl)benzotriazole, 2-(2-hydroxy-3,5-di-tert.-amylphenyl)benzotriazole and 3-[3(benzotriazole-2-yl-5-t-butyl-4-hydroxyphenyl] propionate of polyethylene glycol. Suitable as the light stabilizers, for instance, are hindered amines such as 2-(3,5-di-t-butyl-4-hydroxybenzyl)-2'-n-butylmalonate, bis(1,2,2,6-pentamethyl)-4-piperidyl) bis(1,2,2,6,6-pentamethyl-4-piperidyl sebacate and tetrakis(2,2,6,6-tetramethyl-4-piperidyl)-1,2,3,4-butane tetracarboxylate.

Combined use of the UV absorbers and light stabilizers results in remarkable improvements in weather resistance.

The UV absorbers and light stabilizers are used in the respective amounts of 0.01-10 parts by weight per 100 parts by weight of the resinous composition. In particular, it is desired that 0.1-2 parts by weight of the UV absorber and 0.5-4 parts by weight of the light stabilizer be simultaneously added to the resinous composition. Too small amounts are less effective for improvements in weather resistance, whereas too small amounts give rise to adverse influences such as drops of setting properties and adhesion.

The thus obtained EB setting resinous composition is sticky before setting. This is important, because the shape and physical properties (e.g. wear resistance) of the resulting coat cannot be well controlled without stickiness before setting.

The support film used in this invention may be made of polyester, polyethylene, polypropylene, polyvinyl chloride, polyvinylidene chloride, polycarbonate, nylon, polystyrene, ethylene/vinyl acetate copolymers, ABS.

In this invention, a film of about 6-500 µm in thickness may be used as the support film. Particularly preferred results are obtainable, if the support film used has a thickness of the order of 25-250 µm.

In this invention, the coat of resin set by exposure to electron beams has a thickness in the range of 2-150 µm. At less than 2 µm no sufficient scuffing resistance is attainable. At a certain or larger thickness, on the other hand, the soft coat film is unlikely to curl up. However, setting becomes insufficient at a thickness exceeding 150 µm.

The coat of resin set by exposure to electron beams is formed as follows.

A coating material with or without a solvent is first prepared. Usable as the solvent are alcohols such as methanol, ethanol, isopropanol, methyl cellosolve and ethyl cellosolve; ketones such as methyl ethyl ketone, acetone and methyl isobutyl ketone; esters such as ethyl acetate and butyl acetate; aromatic hydrocarbons such as toluene and xylene; or mixed solvents thereof; and so on.

Coating, for instance, may be achieved by suitable means such as blade coating, gravure coating, rod coating, knife coating, reverse roll coating and offset gravure coating.

Electron beams may be immediately applied to the coat. In the case of planishing, however, reliance may be placed upon the method set forth in Japanese Patent Kokai Publication No. Sho. 57-22204.

With such an arrangement as shown schematically in Figure 1, a coating solution 3 of the resin composition is first coated on a support film 1 by means of an applicator 2. Then, a planished material 4 is laminated on the film 1 through its mirror surface, followed by the setting of the coat with an electron beam irradiator 5. Finally, the planished material 4 is released off the support film 1. If required, pre- and post-heating may be carried out before and after the irradiation of electron beams, using heaters 6 and 7 for pre-heating and a heater 8 for post-heating, respectively.

Referring then to Figure 2, a coating solution 3 is applied on a planished material 4 with the use of an applicator 2. Then, a support film 1 is laminated on the material 4, followed by the setting of the coat by means of an electron beam irradiator 5. Finally, the set mass is released from the planished material 4. If required, pre-heating and post-heating may again be carried out with heaters 6, 7 and a heater 8, respectively.

As the planished materials use may be made of such materials as metal plates or sheets, plastic films, resin-coated papers or films, metallized films or papers and glass.

By using matted sheets or panels (e.g. polyethylene terephthalate sheets) in place of the planished materials, matted coats may be obtained. Unlike non-glare layers containing, e.g. silica particles, the non-glare layers obtained in this case do not scatter light and are well uniform on their surfaces, since they have a uniformly irregular pattern on their surfaces.

Figure 3 illustrates an example of how to obtain a matted resin layer having fine irregularities on its surface. After a coating solution 13 is applied on a support film 10, it is exposed to electron beams from an electron beam irradiator 15 while it is pressed against and engaged with a laminating roll to which fine irregularities have been imparted, whereby a coat 13 is set. Thus, the fine irregularities on the laminating roll 14 are transferred onto the surface of the set coat. Subsequent release of the film from the roll 14 by a roll 16 gives a matted film having fine irregularities on its surface.

Reference will now be made to how to form a support film/resin layer/laminating film laminate by such a laminating method as illustrated in Figure 4.

This laminating method for applying the aforesaid composition on a support film is characterized by providing support and laminating films; locating the two films together between a pair of rolls; carrying the two films under pressure while feeding said composition therebetween to form a layer of said composition therebetween and forcing out an excessive amount of said composition fed with a pressure with which said two films are pressed together between said rolls, whereby a mass of said composition is formed on the border between said two films at an inlet of a gap defined between said rolls, thereby preventing a gas e.g. air bubbles from entering the layer of said composition formed between said two films; irradiating the obtained support film/composition/laminating film laminate with ionizing radiations to crosslink said composition therein; and releasing said laminating film from said laminate to form a resin layer on the surface of said support film.

According to usual techniques used for laminating films together, at least one film is coated with a composition in the amount required for lamination, and is then pressed against the other film in a gap defined between rolls such as nip rolls. A problem with these techniques, however, is that when the coating solution is coated ununiformly, laminated in the form of a thick layer or the like, air bubbles are likely to enter the coat layer.

Inclusion of air in the coat layer does not only result in a drop of quality but is also responsible for poor appearance, blistering, etc. In addition, when a resin layer is set following lamination, air inclusions behave as a reaction inhibitor, making the setting of the resin layer insufficient.

According to the method according to this invention, however, a pair of films are pressed together with the coating solution - composed of the aforesaid composition - located therebetween in an amount larger than required to obtain the desired film thickness, so that an excessive amount of the ink is forced out by the pressure applied to form a mass of the ink, which in turn prevents inclusion of air bubbles, etc. effectively.

Figure 4 is a schematic view illustrative of the laminating method according to this invention.

The arrangement shown in Fig. 4 comprises a pair of nip rolls 21 and 22, a coating roll 23 and a coating reservoir 25.

In such a system, one film, e.g. a support film 26 is supplied through between the nip roll 21 and the coating roll 23 into a gap between the nip rolls 21 and 22. Since the coating roll 23 is covered on its surface with a coating solution 24 contained in the reservoir 25, the support film 26 reaches an inlet of the gap between the nip rolls 21 and 22 after it has been coated with the coating solution 24.

At that time, the gap between the coating roll 23 and the nip roll 21 is regulated in such a way that the amount of the coating solution 24 to be applied on the support film 26 is larger than required for lamination.

A laminating film 27, on the other hand, is fed through the nip roll 22 into the gap's inlet.

The support and laminating films 26 and 27 fed into the gap's inlet are pressed and laminated together between the nip rolls 21 and 22. In this case, the coating solution is coated in an amount larger than required to obtain the desired film thickness, so that an excessive amount of the ink is forced out by the pressure applied toward the gap's inlet, where an ink mass 28 is formed.

By forming the ink mass 28 in this way, the support and laminating films 26 and 27 are fully covered on their surfaces of contact with the ink at the time of lamination. It is thus possible to laminate the two films together without contacting air and, hence, to prevent inclusion of air in the coat layer effectively.

In the illustrated embodiment, the ink mass 28 is so located on the lower side of the roll gap that upon reaching a certain size, the ink can trickle down, as shown by a broken line in Figure 4. Recovery and recycle of excessive ink, as achieved by receiving it in the reservoir 25, would offer an economical advantage.

It is noted that the amount of the ink applied in dents may be regulated by adjusting the gap between the nip rolls 21 and 22 in such a way that the composition layer having a desired thickness is obtainable depending upon the thickness of the support and laminating films 26 and 27 and the type of ink used.

After the support and laminating films 26 and 27 have been laminated together as mentioned above, a soft coat film can be obtained by setting the coating solution with the aid of drying means or setting means such as ultraviolet rays and electron beams, followed by peeling only the laminating film off the support film.

No critical limitation is placed on materials of which the laminating film 26 usable with the laminating method according to this invention is made. For instance, various materials may be used, including films or sheets of synthetic resins, e.g. polyesters such as polyethylene terephthalate, polyolefins such as polyethylene and polypropylene, polyamides such as nylon, polycarbonates, polyacrylates, polystyrene and polyvinyl chloride; synthetic or natural papers; and so on.

When a matted film having fine irregularities is used as the laminating film, it should preferably have its surface roughness lying in the range of 0.2-100 μm as expressed in terms of Ra - center-line average

roughness - measured according to JIS-B0601.

Reference will now be made to how to set the aforesaid resin layer.

As already mentioned, the resin layer is set by exposure to ionizing radiations such as electron beams and ultraviolet rays. According to this invention, however, the resin layer may be set with a single or plural doses of ionizing radiations.

For instance, the resin layer may be set with plural doses of ionizing radiations in the following successive manner.

The laminate is successively irradiated with (a) a first dose of radiations from the support film side and (b) a second dose of radiations from the laminating film side.

In an alternative embodiment, the resin layer may be set with plural doses of ionizing radiations in the following successive manners.

(a) The laminate is successively irradiated with (a) a first dose of radiations from the laminating film side and (b) a second dose of radiations from the support film side.

In a further embodiment, the resin layer may be set with plural doses of ionizing radiations in the following successive manner.

The laminate is successively irradiated with a first dose of ionizing radiations from the laminating or support film side until the resin layer has a gel fraction reduced to 90% or less and (b) with a second dose of ionizing radiations from the laminating or support film side until the resin layer is set substantially to perfect.

Such irradiation of ionizing radiations in plural doses will now be explained more illustratively.

The laminate is irradiated with ionizing radiations in the following two-stage manner.

First, the laminate is irradiated with a first dose of ionizing radiations from the support film side (or from the side of the resin layer to be not activated), which pass through the support film to cause a partial setting of the resin layer applied on the opposite surface thereof. Such a setting occurs primarily in the vicinity of the surface of the support film, i.e. in a deep part of the resin layer. In other words, a surface part of the resin layer (close to the laminating film) is not completely set.

Subsequently, the laminate is irradiated with ionizing radiations from either one side or both sides thereof to set the resin layer completely. In other words, the laminate may be irradiated with the radiations from (a) the side to be activated or (b) the side to be not activated or (c) both. Practically, it is preferred that the laminate be exposed to the radiations from the side to be activated, thereby setting the resin layer. If required, the second-stage irradiation may be carried out twice or more.

The above-mentioned method makes it possible to distribute the additive locally on the surface of the layer set by ionizing radiations, keeping the obtained film surface stable and permitting it to be well activated.

By irradiating the laminate successively with the first dose of ionizing radiations from the backside of the support film coated with a resin containing an additive for activating the resin layer to set a deep region of the resin layer partly and with the second dose of ionizing radiations from either one side or both sides of the support film, it is possible to obtain a set layer having the additive component (the feel improver) distributed or precipitated locally on its surface region. Such a local distribution of the additive component on the set layer enables the film surface to be more activated.

Although the inventors have yet to learn the reason why this invention produces such an effect as mentioned just above, it is believed that as the deep region of the resin layer is set by the first-stage irradiation of ionizing radiations, the feel improver is more likely to migrate onto the surface region of the resin layer, since the latter region is not yet set at that time.

Especially when the laminating film pre-treated on its surface with the feel improver is used and the laminate is then exposed to the first and second doses of ionizing radiations, the film surface is much more, activated. This appears to be because of the additive component being much more likely to migrate from the ink toward the laminating film (or onto the surface region of the resin layer).

Thus, if the laminate is exposed to the first dose of ionizing radiations to distribute the feel improver component locally on the surface region of the resin layer and subsequently to the second dose of ionizing radiations from either one side or both sides thereof to set the resin layer perfectly, it is then possible to obtain a stable and activated surface.

Usable to set the resin layer are electron beams emitted from various types of electron beam accelerators, e.g. Cockloftwalton, van de Graaff, resonance transformer, insulating core transformer, linear, dynatron and high frequency types of electron beam accelerators and having an energy in the range of 50-1,000 KeV, preferably 100-300 KeV. In general, doses of electron beams are 1-20 Mrad.

It is understood that the soft coat film of this invention may allow the support film to contain a colored layer and/or a metallized layer. The colored and/or metallized layers may be coated or vapor deposited on

the support film in conventional manners, followed by the application of the resin layer thereon. A soft coat film is then obtained by treating the laminate with the aforesaid method.

Because the colored and/or metallized layers, if used, present a variety of colors or patterns, it is possible to obtain a soft coat film which serves not only as a protective layer for articles but also decorative purposes.

More conveniently, the soft coat film of this invention may include an adhesive layer provided on the backside of the support film. This enables it to be applied to articles more easily.

According to this invention, the soft coat film may also be constructed as a transfer sheet. This transfer sheet may be obtained by providing a releasable soft coat layer on a support film and, if required, providing at least one layer of printed, vapor-deposited and colored layers and an adhesive layer on the soft coat layer. This transfer sheet is transferred onto a desired article through its adhesive layer, and only the support film is then peeled off. In this way, the soft coat layer may be formed on the surface of said article.

The thus obtained soft coat film is characterized by showing sufficient elongation. In particular, the set resin layer in the soft coat film shows a glass transition temperature in the range of -150 °C to 20 °C, so that cracking is unlikely to occur and an elongation of 30-1,000%, esp. 100% or more is obtained.

The present invention will now be explained in greater detail with reference to the following examples.

Example 1

Thirty-three point three (33.3) g of isophorone diisocyanate were placed in a 500-ml separable flask equipped with a heater/stirrer unit and a separable cover with the dropwise addition of 0.1 g of di-n-butyltin dilaurate, wherein they were heated under agitation at 40 °C. While 200 g of Prakcel 220AL (having a molecular weight of 2000 and made by Daicel Chemical Industries, Ltd.) were added to the system so slowly that there was no sharp increase in the in-system temperature, the reaction was allowed to proceed. Two hours later, the reaction temperature was brought up to 60 °C, at which 13 g of hydroxyethyl acrylate were added. Stirring was continued until IR-spectral peaks showing isocyanate groups at 2330 $cm^{-1}$ disappeared. After the reaction had come almost quantitatively to an end, the desired urethane compound was obtained.

Added to 40 parts by weight of the thus obtained urethane acrylate compound were 10 parts by weight of PR-202 (an urethane acrylate product made by Mitsubishi Chemical Industries, Ltd.), 50 parts by weight of diethoxyethyl acrylate (Biscoat 190 made by Osaka Yuki Kogyo K.K.) and 0.5 parts by weight of silicone AK-30 (Made by Toa Gosei Kagaku K.K.) to prepare a coating solution. According to the coating scheme shown in Fig. 1, the coating solution was coated on a 150-µm thick polyvinyl chloride sheet (made by Sanpo Jushi Kogyo K.K.) in a larger-than-required amount to form an ink mass. Then, a matted polyethylene terephthalate film having a surface average roughness (Ra) of 1.0 µm (made by Kimoto K.K.) was laminated on the resulting coat, which was in turn irradiated with electron beams from a curtain type of irradiator (operating at an accelerated voltage of 180 KV) in a first dose of 1 Mrad and then in a second dose of 5 Mrad at the same voltage. A soft coat film was obtained by releasing the matted film from the support film after the setting of the resin. The obtained soft coat film was estimated in the following manners.

(a) Nail scratch test

The coat was scratched two or three times with an index finger (over a length of about 30 mm) to make observations of whether or not it received serious scratches, unrecoverable scratches or scratches reaching the support film.

O: No scratch found.
X: Scratches found.

(b) Cracking by elongation

A 1-cm wide test piece was pulled at 20 °C and a speed of 100 mm/min. to measure an elongation at which cracking occurred.

(c) Adhesion test

Checkers testing was performed according to JISK-5400 to estimate adhesion in terms of the number of unbonded checkers.

(d) Warm water-resistant test

A test piece was immersed in warm water of 50 ° C for 24 hours to observe its surface state.
O: Nothing abnormal.
X: Anything abnormal.

(e) Moistureproof test

A test piece was left in an atmosphere of 50 ° C and 90% RH for 400 hours to make observations of whether or not it underwent cracking, blistering, peeling or serious discoloration.
O: Nothing abnormal.
X: Anything abnormal.

(f) Chemical-resistant test

A test piece was immersed in a 5% aqueous solution of acetic acid at 20 ° C for 96 hours, a 0.1 N aqueous solution NaOH at 50 ° C for 240 hours and kerosene at 20 ° C for 24 hours to make observations of whether or not it underwent cracking, blistering, peeling, serious discoloration and gloss changes.
O: Nothing abnormal.
X: Anything abnormal.

(g) Measurement of Tg

Tg was determined from Tan $\delta$ peaks measured by Rheovibron DDY-II-EP made by Toyo Baildwin Co., Ltd.

(h) Hand and drape

A light touch was given to a test piece by an index finger to make estimation of how it was felt.
O: Slimy feel akin to suede.
X: Other feels.
The results are reported in Table 2.

Examples 2-13

The procedure of Example 1 was followed to prepare soft coat films with the compositions referred to in Table 1, of which similar estimations were made. The results are again reported in Table 2.

Comparative Example 1

Sixty-nine point six (69.5) g of tri-diisocyanate were placed in a 500-ml separable flask equipped with a heater/stirrer unit and a separable cover with the dropwise addition of 0.1 g of di-n-butyltin dilaurate, wherein they were heated under agitation at 40 ° C. While 18 g of 1,4-butanediol were added to the system so slowly that there was no sharp increase in the in-system temperature, the reaction was allowed to proceed. Two hours later, the reaction temperature was brought up to 60 ° C, at which 47 g of hydroxyethyl acrylate were added. Stirring was continued until IR-spectral peaks showing isocyanate groups at 2330 $cm^{-1}$ disappeared. After the reaction had come almost quantitatively to an end, the desired urethane compound was obtained.

Added to 70 parts by weight of the thus obtained urethane acrylate compound were 30 parts by weight of M-5700 (made by Toa Gosei Kagaku K.K.), 10 parts by weight of dipentaerythritol hexaacrylate (DPHA made by Nippon Kayaku Kogyo K.K.) and 0.5 parts by weight of silicone AK-30 (made by Toa Gosei Kagaku K.K.) to prepare a coating solution. The procedure of Example 1 was followed to prepare soft coat films, of which similar estimations were made. The results are again reported in Table 1.

Comparative Example 2

The procedure of Example 1 was followed to prepare soft coat films with the compositions referred to in Table 1, of which similar estimations were made. The results are again reported in Table 2.

(Notes)

(1) Urethane acrylate products

(a) Products made by Nippon Gosei Kagaku K.K.)

UV-3000B

UV-3100B

(b)Products made by Mitsubishi Chemical Industries, Ltd.

PR-202

PR-206

PR-208

PR-209

PR-210

PR-211

PR-212

PR-213

(c)Products made by Nippon Kayaku K.K. HCU-501

(2) Monofunctional monomers

(a) Products made by Kyoei-sha Yushi Kagaku K.K.

THF-A: Tetrahydrofurfuryl acrylate

PO-A: Phenoxyethyl acrylate

HOP-A: 2-hydroxypropylacrylate

MTG-A: Methoxytriethylene glycol acrylate

(b)Products made by Toa Gosei Kagaku Kogyo K.K.

M-150: N-vinyl-2-pyrrolidone

M-5600: $CH_2=CHCOOCH_2CH_2COOH$ acrylic acid dimer

M-111:

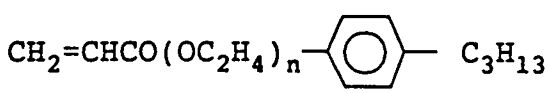 (n ≒ 1)

Acrylate of nonylphenol-ethylene oxide adduct.

(c)Products made by Osaka Yuki Kagaku Kogyo K.K.

Biscoat 190: $CH_2=CHCOO(CH_2CH_2O)_2C_3H_5$ Ethoxydiethylene glycol acrylate

Biscoat 158: $CH_2=CHCOOCH_2CH_2CH(CH_3)_2$

(3) Bifunctional acrylic monomer

(a) Products made by Toa Gosei Kagaku Kogyo K.K.

M-220: $CH_2=CHCOO(C_3H_5O)_3COCH=CH_3$ Tripropylene glycol acrylate

M-215:

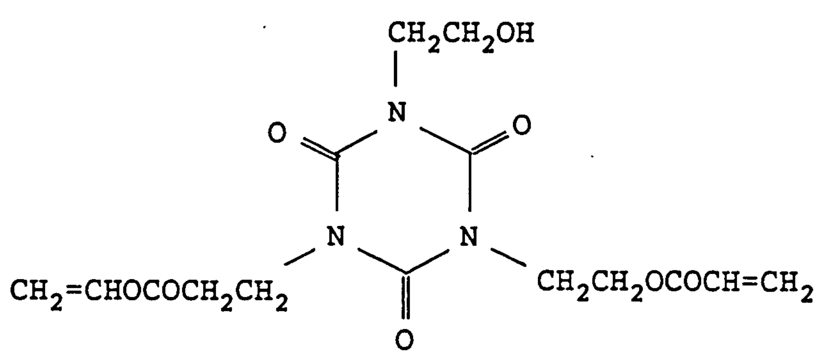

(b) Product made by Kyoei Yushi Kagaku Kogyo K.K.

DCP-A:

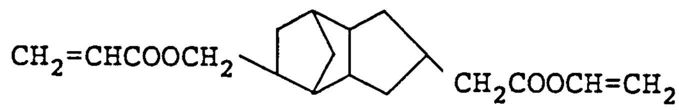

Hydrogenated dicyclopentadienyl acrylate BA-134:

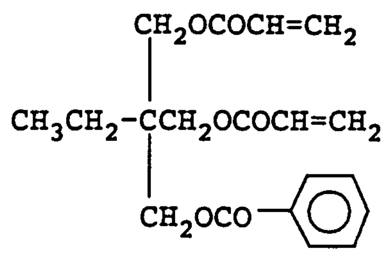

Trimethylolpropane acrylic acid benzoate

NP-A: $CH_2 = CHCOOCH_2C(CH_3)_2CH_2COOCCH = CH_2$

Epoxy ester 3002: Diglycidyl ether diacrylate of an adduct of bisphenol A with 2 moles of propylene oxide

(c) Products made by Nippon Kayaku K.K.

MANDA: Diacrylate of an ester of hydroxypivalate with neopentyl glycol

HGA-240E: Diacrylate of an ester of an adduct of hydrogenated bisphenol A with 4 moles of propylene dioxide

R-167: Diacrylate of a diglycidyl ether of 1,6-hexanediol

(d) Products by Hodogaya Kagaku Kogyo K.K.

AC-PTG1000: $CH_2 = CHCOO(CH_2CH_2CH_2CH_2O)_n\text{-}OCCH = CH_2$ (M.W.: 1,000)

(e) Product made by Osaka Kagaku Kogyo K.K.

Biscoat 230: 1,6-hexanediol diacrylate

(4) Trifunctional monomers

Products made by Nippon Kayaku K.K.

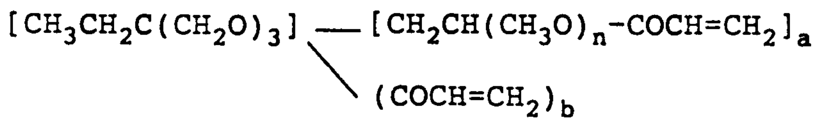

$$(\overline{n} \cdot \overline{a} = 2, \ a + b = 3)$$

(6) Urethane acrylates prepared in the Examples

(7) Tetra- or more-functional acrylic monomers Product made by Nippon Kayaku K.K.

DPHA:

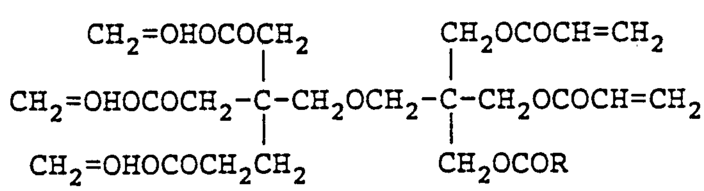

Mixture of acryloyl with hydroxy

(8) Mixture at a molar ratio of 1:1

(9) Urethane acrylate prepared in Comp. Ex. 1.

Table 1

| Ex. Nos. | Composition (parts by weight) | | | | | |
|---|---|---|---|---|---|---|
| | (1) Urethane acrylate | (2) Monofunctional acrylate monomer | (3) Difunctional acrylic monomer | (4) Trifunctional acrylic monomer | (7) Tetra- or more-functional monomers | (5) Tactile improvers |
| Ex. 1 | 40 (6)<br>PR-202 (10) | Biscoat 190 (50) | – | – | – | AX-30 (0.5) |
| Ex. 2 | UV-3000B (40) | Biscoat 190 (50) | K-220 (10) | TPA-320 (3) | – | X-22-170D (0.5) |
| Ex. 3 | UV-3000B (40) | THF-A (55) | MANDA (5) | – | – | AK-30 (0.5) |
| Ex. 4 | V-3100B (45) | M-150 (45) | 3002A (10) | – | – | RC720 (0.4), RC705 (0.1) |
| Ex. 5 | UV-3000B (45) | (8)<br>K-150/N-5600 (45) | N-215 (10) | – | – | HK-2 (0.5) |
| Ex. 6 | PR-208 (75) | PO-A (20) | HBA-240E (5) | – | – | Fluoroslip 551 (3) |
| Ex. 7 | PR-209 (70)<br>PR-202 (10) | K-5700 (20) | – | – | – | TUV6000 (0.5) |
| Ex. 8 | PR-210 (40) | Biscoat 158 (50) | DCP-A (10)<br>Biscoat 230 (3) | – | – | X-22-161AS (0.5) |
| Ex. 9 | PR-211 (45)<br>PR-202 (15) | HOP-A (40) | – | – | – | Lubron L-2 (2) |

Table 1 (continued)

| Ex. Nos. | Composition (parts by weight) | | | | | |
|---|---|---|---|---|---|---|
| | (1) Urethane acrylate | (2) Monofunctional acrylate monomer | (3) Difunctional acrylic monomer | (4) Trifunctional acrylic monomer | (7) Tetra- or more-functional monomers | (5) Tactile improvers |
| Ex. 10 | PR-212 (40) | K-111 (50) | R-167 (10) | - | - | Lubron L-2 (2) |
| Ex. 11 | PR-213 (40) | MTG-A (50) | BA-134 (10)<br>NP-A (3) | - | - | Tosiphile F-203 (2) |
| Ex. 12 | UV-3000B<br>PR-206 (100) | - | - | - | - | X-24-8201 (0.5) |
| Ex. 13 | PR-202 (50) | - | AC-PTG1000 (50) | - | DPHA (5) | L-7001 (0.5) |
| Comp. Ex. 1 | 70 (9) | M-5700 (30) | - | - | DPHA (10) | AK-30 (0.5) |
| Comp. Ex. 2 | HCU-501 (30) | - | - | - | DPHA (70) | AK-30 (0.5) |

Table 2

| Ex. Nos. | Nail scratch Test | Cracking by elongation (%) | Adhesion Test | Warm water-resistant test | Moisture-proof Test | Chemical-resistant Test | Tg/°C | Hand and drape |
|---|---|---|---|---|---|---|---|---|
| Ex. 1 | ○ | 180 | 100/100 | ○ | ○ | ○ | -51 | ○ |
| Ex. 2 | ○ | 170 | 100/100 | ○ | ○ | ○ | -36 | ○ |
| Ex. 3 | ○ | 250 | 100/100 | ○ | ○ | ○ | -42 | ○ |
| Ex. 4 | ○ | 200 | 100/100 | ○ | ○ | ○ | -41 | ○ |
| Ex. 5 | ○ | 300 | 100/100 | ○ | ○ | ○ | -36 | ○ |
| Ex. 6 | ○ | 220 | 100/100 | ○ | ○ | ○ | - 5 | ○ |
| Ex. 7 | ○ | 160 | 100/100 | ○ | ○ | ○ | + 7 | ○ |
| Ex. 8 | ○ | 160 | 100/100 | ○ | ○ | ○ | -10 | ○ |
| Ex. 9 | ○ | 220 | 100/100 | ○ | ○ | ○ | -50 | ○ |
| Ex. 10 | ○ | 280 | 100/100 | ○ | ○ | ○ | - 4 | ○ |
| Ex. 11 | ○ | 180 | 100/100 | ○ | ○ | ○ | -29 | ○ |
| Ex. 12 | ○ | 370 | 100/100 | ○ | ○ | ○ | -45 | ○ |
| Ex. 13 | ○ | 60 | 100/100 | ○ | ○ | ○ | -43 | ○ |
| Comp. Ex. 1 | ○ | 10 | 100/100 | ○ | ○ | × | +45 | × |
| Comp. Ex. 2 | ○ | 20 | 0/100 | ○ | ○ | ○ | -40 | × |

As recounted above, the soft coat films of this invention excel not only in flexibility, flexing properties and injure recovery but also in such properties as scuffing resistance, wear resistance and chemical resistance. For that reason, they are very useful as protective layers for electrical appliances, furniture, office equipment, etc.

## Claims

1. A composition for soft coat films having a soft tactile impression comprising, as essential components, (a) a urethane acrylate having a molecular weight of 500-50,000; and (b) a tactile improver selected from silicone resins, waxes and fluorocarbon resin surfactants, the amount of said tactile improver being in the range of 0.05-15 parts by weight based on 100 parts by weight of the composition, the composition having a glass transition temperature of - 150 to 20 °C and an elongation of 30 to 1,000%, after setting.

2. A composition as recited in Claim 1, wherein said urethane acrylate comprises an isocyanate compound containing at least two isocyanate groups, a compound containing 1-4 hydroxyl groups and a compound containing 1-2 hydroxyl groups and 1-5 radically polymerizable groups.

3. A composition as recited in Claim 1, wherein said urethane acrylate comprises a compound containing at least two isocyanate groups and a compound containing 1-4 hydroxyl groups and 1-5 radically polymerizable groups.

4. A composition as recited in anyone of Claims 1 to 3, in which the content of said urethane acrylate lies in the range of 20-95% by weight.

5. A composition as recited in anyone of Claims 1 to 4, which contains one or two or more acrylic monomers, each having at least one radically polymerizable group per molecule.

6. A composition as recited in anyone of Claims 1 to 5, which further contains one or two or more urethane compounds.

7. A composition as recited in anyone of Claims 1 to 6, wherein the isocyanate compound forming a part of said urethane acrylate is expressed by the following formula (I) or (II):

   $OCNR_1NCO$ (I),

   or

   $R_2\text{-}(NCO)_3$ (II)

   wherein $R_1$ is a hydrocarbon group having 4-14 carbon atoms and $R_2$ is a group having an isocyanurate trimethylolpropane skeleton.

8. A soft coat film having a soft tactile impression comprising: a support film; and a resin layer formed on the support film, the resin layer set by irradiating a composition comprising, as essential components, (a) a urethane acrylate having a molecular weight of 500-50,000; and (b) a tactile improver selected from silicone resins, waxes and fluorocarbon resin surfactants, the amount of said tactile improver being in the range of 0.05-15 parts by weight based on 100 parts by weight of the composition, the composition having a glass transition temperature of -150 to 20 °C and an elongation of 30 to 1,000%, after setting.

9. A soft coat film as recited in Claim 8, wherein said urethane acrylate comprises an isocyanate compound containing at least two isocyanate groups, a compound containing 1-4 hydroxyl groups and a compound containing 1-2 hydroxyl groups and 1-5 radically polymerizable groups.

10. A soft coat film as recited in Claim 8, wherein said urethane acrylate comprises a compound containing at least two isocyanate groups and a compound containing 1-4 hydroxyl groups and 1-5 radically polymerizable groups.

11. A soft coat film as recited in anyone of Claims 8 to 10, in which the content of said urethane acrylate lies in the range of 20-95% by weight.

**12.** A soft coat film as recited in anyone of Claims 8 to 11, which contains one or two or more acrylic monomers, each having at least one radically polymerizable group per molecule.

**13.** A soft coat film as recited in anyone of Claims 8 to 12, wherein said composition further contains one or two or more urethane compounds.

**14.** A soft coat film as recited in anyone of Claims 8 to 13, wherein, after setting, the resin layer has fine irregularities on its surface and a surface roughness in the range of 0.2-100 µm as expressed in terms of a center-line average roughness Ra.

**15.** A soft coat film as recited in anyone of Claims 8 to 14, wherein said support film has a colored layer.

**16.** A soft coat film as recited in anyone of Claims 8 to 15, wherein said support film has a metallized layer.

**17.** A soft coat film as recited in anyone of Claims 8 to 16, wherein said support film is printed.

**18.** A soft coat film as recited in anyone of Claims 8 to 17, wherein said support film is provided with an adhesive layer on its backside.

**19.** A method for producing soft coat films having a soft tactile impression, characterized by:

forming between a support film and a laminating film a composition layer comprising, as essential components, (a) a urethane acrylate having a molecular weight of 500-50,000 and (b) a tactile improver selected from silicone resins, waxes and fluorocarbon resin surfactants, the amount of said tactile improver being in the range of 0.05-15 parts by weight based on 100 parts by weight of the composition, the composition having a glass transition temperature of -150 to 20°C and an elongation of 30 to 1,000%, after setting;

irradiating the thus obtained support film/composition layer/laminating film laminate with ionizing radiation to set the composition in said laminate; and

releasing only said laminating film from said laminate.

**20.** A method as recited in Claim 19, characterized by locating said support and laminating films together between a pair of rolls; carrying the two films under pressure while feeding said composition therebetween to form said composition layer therebetween and forcing out an excessive amount of said composition fed with a pressure with which said two films are pressed together between said rolls, whereby a mass of said composition is formed on the border between said two films at an inlet of a gap defined between said rolls, thereby preventing inclusion of air bubbles in said composition layer formed between said two films.

**21.** A method as recited in Claim 19 or 20, wherein said laminating film is treated with a tactile improver.

**22.** A method as recited in anyone of Claims 19 to 21, wherein said laminate is irradiated twice or more with ionizing radiation.

**23.** A method as recited in anyone of Claims 19 to 22, wherein said laminate is successively irradiated with plural doses of ionizing radiation from the support film side.

**24.** A method as recited in anyone of Claims 19 to 23, wherein the successive irradiation of said laminate with plural doses of ionizing radiation is carried out by:

irradiating said laminate with (a) a first dose of ionizing radiation from the laminating film side and then (b) a second dose of ionizing radiation from the support film side.

**25.** A method as recited in anyone of Claims 19 to 23, wherein the successive irradiation of said laminate with plural doses of ionizing radiation is carried out by:

irradiating said laminate with (a) a first dose of ionizing radiation from the support film side and then (b) a second dose of ionizing radiation from the laminating film side.

**26.** A method as recited in anyone of Claims 19 to 25, wherein the successive irradiation of said laminate with plural doses of ionizing radiation is carried out by:

irradiating said laminate with a first dose of ionizing radiation from the laminating film or support film side until said composition layer has a gel fraction reduced to 90% or less and then (b) a second dose of ionizing radiation from the laminating or support film side to set said composition layer substantially to perfect.

**27.** A method as recited in anyone of Claims 19 to 26, wherein said ionizing radiation is electron beams or ultraviolet rays.

**28.** A method as recited in anyone of Claims 19 to 27, wherein said laminating film comprises a planished film.

**29.** A method as recited in anyone of Claims 19 to 28, wherein said laminating film comprises a matted film having fine irregularities on its surface.

**30.** A method as recited in anyone of Claims 19 to 29, wherein said laminating film has fine irregularities on its surface and a surface roughness in the range of 0.2-100 µm as expressed in terms of a center-line average roughness Ra.

**31.** A method as recited in anyone of Claims 19 to 30, wherein said support film has a colored layer.

**32.** A method as recited in anyone of Claims 19 to 31, wherein said support film has a metallized layer.

**33.** A method as recited in anyone of Claims 19 to 32, wherein said support film is printed.

**34.** A method as recited in anyone of Claims 19 to 33, wherein said film is provided with an adhesive layer on its backside.

**35.** A method for producing soft coat films having a soft tactile impression, characterized by:

forming on a support film a composition layer comprising, as essential components, (a) a urethane acrylate having a molecular weight of 500-50,000 and (b) a tactile improver selected from silicone resins, waxes and fluorocarbon resin surfactants, the amount of said tactile improver being in the range of 0.05-15 parts by weight based on 100 parts by weight of the composition, the composition having a glass transition temperature of -150 to 20 °C and an elongation of 30 to 1,000%, after setting; and

applying pressure to the thus formed laminate from said composition layer side with a forming roll and irradiating said laminate with ionizing radiation, thereby setting said composition layer.

**36.** A laminate for a method of anyone of Claims 19 to 35, wherein the laminate comprises:

a laminating film; and

a composition layer formed on the laminating film, the composition layer comprising a releasable soft coat film comprising, as essential components, (a) a urethane acrylate having a molecular weight of 500-50,000 and (b) a tactile improver selected from silicone resins, waxes and fluorocarbon resin surfactants, the amount of said tactile improver being in the range of 0.05-15 parts by weight based on 100 parts by weight of the composition, the composition having a glass transition temperature of -150 to 20 °C and an elongation of 30 to 1,000%, after setting; and an adhesive layer formed on the composition layer.

**37.** A laminate as recited in Claim 36, wherein at least one layer of printed, metallized and colored layers is interposed between said soft coat film and said adhesive layer.

## Patentansprüche

**1.** Zusammensetzung für weiche Überzugsfilme mit einem weichen Griffgefühl, umfassend, als wesentliche Komponenten, (a) ein Urethanacrylat mit einem Molekulargewicht 500-50 000; und (b) einen Griffverbesserer, ausgewählt aus Silikonharzen, Wachsen und Fluorkohlenwasserstoffharz-oberflächenaktiven Mitteln, wobei die Menge des Griffverbesserers im Bereich von 0,05-15 Gewichtsteilen, bezogen auf 100 Gewichtsteile der Zusammensetzung, liegt, und die Zusammensetzung nach dem Aushärten eine Glasübergangstemperatur von -150 bis 20 °C und eine Dehnung von 30 bis 1000% aufweist.

2. Zusammensetzung nach Anspruch 1, wobei das Urethanacrylat eine Isocyanatverbindung mit mindestens 2 Isocyanatgruppen, eine Verbindung mit 1-4 Hydroxylgruppen und eine Verbindung mit 1-2 Hydroxylgruppen und 1-5 radikalisch polymerisierbaren Gruppen umfaßt.

3. Zusammensetzung nach Anspruch 1, wobei das Urethanacrylat eine Verbindung mit mindestens zwei Isocyanatgruppen und eine Verbindung mit 1-4 Hydroxylgruppen und 1-5 radikalisch polymerisierbaren Gruppen umfaßt.

4. Zusammensetzung nach einem der Ansprüche 1 bis 3, wobei der Gehalt an dem Urethanacrylat im Bereich von 20 - 95 Gew.-% liegt.

5. Zusammensetzung nach einem der Ansprüche 1 bis 4, welche 1 oder 2 oder mehr acrylische Monomeren enthält, die jeweils mindestens eine radikalisch polymerisierbare Gruppe pro Molekül aufweisen.

6. Zusammensetzung nach einem der Ansprüche 1 bis 5, die weiterhin eine oder zwei oder mehr Urethanverbindungen enthält.

7. Zusammensetzung nach einem der Ansprüche 1 bis 6, wobei die einen Teil des Urethanacrylats bildende Isocyanatverbindung durch die folgende Formel (I) oder (II) ausgedrückt wird:

$OCNR_1NCO$ (I),

oder

$R_2$-$(NCO)_3$ (II)

worin $R_1$ eine Kohlenwasserstoffgruppe mit 4-14 Kohlenstoffatomen ist und $R_2$ eine Gruppe mit einem Isocyanurat-Trimethylolpropan-Gerüst bedeutet.

8. Weicher Überzugsfilm mit einem weichen Griffgefühl, umfassend: einen Trägerfilm; und eine Harzschicht, die auf dem Trägerfilm gebildet ist, wobei die Harzschicht ausgehärtet wird durch Bestrahlung einer Zusammensetzung, umfassend, als wesentliche Komponenten, (a) ein Urethanacrylat mit einem Molekulargewicht von 500-50 000; und (b) einem Griffverbesserer, ausgewählt aus Silikonharzen, Wachsen und Fluorkohlenwasserstoffharz-oberflächenaktiven Mitteln, wobei die Menge des Griffverbesserers im Bereich von 0,05-15 Gewichtsteilen, bezogen auf 100 Gewichtsteile der Zusammensetzung, liegt, und die Zusammensetzung nach dem Aushärten eine Glasübergangstemperatur von -150 bis 20 °C und eine Dehnung von 30 bis 1000% aufweist.

9. Weicher Überzugsfilm nach Anspruch 8, wobei das Urethanacrylat eine Isocyanatverbindung mit mindestens 2 Isocyanatgruppen, eine Verbindung mit 1-4 Hydroxylgruppen und eine Verbindung mit 1-2 Hydroxylgruppen und 1-5 radikalisch polymerisierbaren Gruppen umfaßt.

10. Weicher Überzugsfilm nach Anspruch 8, wobei das Urethanacrylat eine Verbindung mit mindestens 2 Isocyanatgruppen und eine Verbindung mit 1-4 Hydroxylgruppen und 1-5 radikalisch polymerisierbaren Gruppen umfaßt.

11. Weicher Überzugsfilm nach einem der Ansprüche 8 bis 10, wobei der Gehalt an dem Urethanacrylat im Bereich von 20-95 Gew.-% liegt.

12. Weicher Überzugsfilm nach einem der Ansprüche 8 bis 11, welcher 1 oder 2 oder mehr acrylische Monomeren enthält, die jeweils mindestens eine radikalisch polymerisierbare Gruppe pro Molekül aufweisen.

13. Weicher Überzugsfilm nach einem der Ansprüche 8 bis 12, wobei die Zusammensetzung weiterhin 1 oder 2 oder mehr Urethanverbindungen enthält.

**14.** Weicher Überzugsfilm nach einem der Ansprüche 8 bis 13, wobei die Harzschicht nach dem Aushärten feine Unregelmäßigkeiten auf ihrer Oberfläche aufweist und eine Oberflächenrauheit im Bereich von 0,2-100 µm, ausgedrückt als Mittellinien-Durchschnittsrauheit Ra.

**15.** Weicher Überzugsfilm nach einem der Ansprüche 8 bis 14, wobei der Trägerfilm eine gefärbte Schicht aufweist.

**16.** Weicher Überzugsfilm nach einem der Ansprüche 8 bis 15, wobei der Trägerfilm eine metallisierte Schicht aufweist.

**17.** Weicher Überzugsfilm nach einem der Ansprüche 8 bis 16, wobei der Trägerfilm bedruckt ist.

**18.** Weicher Überzugsfilm nach einem der Ansprüche 8 bis 17, wobei der Trägerfilm auf seiner Rückseite mit einer Adhäsionsschicht versehen ist.

**19.** Verfahren zur Herstellung von weichen Überzugsfilmen mit einem weichen Griffgefühl, gekennzeichnet durch:
Ausbilden zwischen einem Trägerfilm und einem Laminatfilm eine Zusammensetzungsschicht, umfassend, als wesentliche Komponenten, (a) ein Urethanacrylat mit einem Molekulargewicht von 500-50 000 und (b) einem Griffverbesserer, ausgewählt aus Silikonharzen, Wachsen und Fluorkohlenwasserstoffharz-oberflächenaktiven Mitteln, wobei die Menge des Griffverbesserers im Bereich von 0,05-15 Gewichtsteilen, bezogen auf 100 Gewichtsteile der Zusammensetzung, liegt, die Zusammensetzung nach dem Aushärten eine Glasübergangstemperatur von -150 bis 20°C und eine Dehnung von 30-1000% aufweist;
Bestrahlen des so erhaltenen Trägerfilm/Zusammensetzungsschicht/Laminatfilm-Laminats mit ionisierender Strahlung, um die Zusammensetzung in dem Laminat auszuhärten; und
Freisetzen von nur dem Laminatfilm von dem Laminat.

**20.** Verfahren nach Anspruch 19, gekennzeichnet durch Anordnen des Trägerfilms und Laminatfilms zusammen zwischen ein Rollenpaar; Fördern der zwei Filme unter Druck während die Zusammensetzung dazwischen eingebracht wird, um die Zusammensetzungsschicht dazwischen auszubilden und Herauszwingen einer übermäßigen Masse der eingebrachten Zusammensetzung mit dem Druck, mit dem die zwei Filme zusammen zwischen den Rollen gepreßt werden, wodurch eine Masse der Zusammensetzung an der Grenze zwischen den zwei Filmen an dem Einlaß eines Spalts, der zwischen den Rollen festgelegt ist, gebildet wird, wodurch verhindert wird, daß Luftblasen in der Zusammensetzungsschicht, die zwischen den zwei Filmen gebildet wird, eingeschlossen werden.

**21.** Verfahren nach Anspruch 19 oder 20, wobei der Laminatfilm mit einem Griffverbesserer behandelt wird.

**22.** Verfahren nach einem der Ansprüche 19 bis 21, wobei das Laminat zweimal oder mehrere Male mit ionisierender Strahlung bestrahlt wird.

**23.** Verfahren nach einem der Ansprüche 19 bis 22, wobei das Laminat nacheinander mit mehrfachen Dosen einer ionisierenden Strahlung von der Seite des Trägerfilms bestrahlt wird.

**24.** Verfahren nach einem der Ansprüche 19 bis 23, wobei die nacheinander erfolgende Bestrahlung des Laminats mit mehrfachen Dosen einer ionisierenden Strahlung ausgeführt wird durch:
Bestrahlen des Laminats mit (a) einer ersten Dosis einer ionisierenden Strahlung von der Seite des Laminatfilms und dann (b) einer zweiten Dosis einer ionisierenden Strahlung von der Seite des Trägerfilms.

**25.** Verfahren nach einem der Ansprüche 19 bis 23, wobei die aufeinanderfolgende Bestrahlung des Laminats mit mehrfachen Dosen von ionisierender Strahlung ausgeführt wird durch:
Bestrahlung des Laminats mit (a) einer ersten Dosis von ionisierender Strahlung von der Seite des Trägerfilms und dann (b) einer zweiten Dosis von ionisierender Strahlung von der Seite des Laminatfilms.

**26.** Verfahren nach einem der Ansprüche 19 bis 25, wobei die aufeinanderfolgende Bestrahlung des Laminats mit mehrfachen Dosen von ionisierender Strahlung ausgeführt wird durch:
Bestrahlung des Laminats mit einer ersten Dosis von ionisierender Strahlung von der Seite des Laminatfilms oder Trägerfilms, bis die Zusammensetzungsschicht eine auf 90% oder weniger reduzierte Gelfraktion aufweist und dann (b) einer zweiten Dosis von ionisierender Strahlung von der Seite des Laminatfilms oder Trägerfilms, um die Zusammensetzungsschicht im wesentlichen fertigzustellen.

**27.** Verfahren nach einem der Ansprüche 19 bis 26, wobei die ionisierende Strahlung Elektronenstrahlen oder ultraviolette Strahlung ist.

**28.** Verfahren nach einem der Ansprüche 19 bis 27, wobei der Laminatfilm einen planierten Film umfaßt.

**29.** Verfahren nach einem der Ansprüche 19 bis 28, wobei der Laminatfilm einen mattierten Film mit feinen Unregelmäßigkeiten auf seiner Oberfläche umfaßt.

**30.** Verfahren nach einem der Ansprüche 19 bis 29, wobei der Laminatfilm feine Unregelmäßigkeiten auf seiner Oberfläche und eine Oberflächenrauheit im Bereich von 0,2-100 $\mu$m, ausgedrückt als Mittellinien-Durchschnittsrauheit Ra aufweist.

**31.** Verfahren nach einem der Ansprüche 19 bis 30, wobei der Trägerfilm eine gefärbte Schicht aufweist.

**32.** Verfahren nach einem der Ansprüche 19 bis 31, wobei der Trägerfilm eine metallisierte Schicht aufweist.

**33.** Verfahren nach einem der Ansprüche 19 bis 32, wobei der Trägerfilm bedruckt ist.

**34.** Verfahren nach einem der Ansprüche 19 bis 33, wobei der Film auf seiner Rückseite mit einer adhäsiven Schicht versehen ist.

**35.** Verfahren zur Herstellung von weichen Überzugsfilmen mit einem weichen Griffgefühl, gekennzeichnet durch:
Ausbilden auf einem Trägerfilm eine Zusammensetzungsschicht, umfassend, als wesentliche Komponenten, (a) ein Urethanacrylat mit einem Molekulargewicht von 500-50 000 und (b) einem Griffverbesserer, ausgewählt aus Silikonharzen, Wachsen und Fluorkohlenwasserstoffharz-oberflächenaktiven Mitteln, wobei die Menge des Griffverbesserers im Bereich von 0,05-15 Gewichtsteilen, bezogen auf 100 Gewichtsteile der Zusammensetzung, liegt, die Zusammensetzung nach dem Aushärten eine Glasübergangstemperatur von -150 bis 20 °C und eine Dehnung von 30 bis 1000% aufweist; und
Anwenden eines Drucks auf das so gebildete Laminat von der Seite der Zusammensetzungsschicht mit einer Formrolle und Bestrahlung des Laminats mit ionisierender Strahlung, wodurch die Zusammensetzungsschicht ausgehärtet wird.

**36.** Laminat für ein Verfahren gemäß einem der Ansprüche 19 bis 35, worin das Laminat umfaßt:
einen Laminatfilm; und
eine Zusammensetzungsschicht, die auf dem Laminatfilm gebildet ist, wobei die Zusammensetzungsschicht einen abtrennbaren weichen Überzugsfilm umfaßt, der als wesentliche Komponenten (a) ein Urethanacrylat mit einem Molekulargewicht von 500-50 000 und (b) einen Griffverbesserer, ausgewählt aus Silikonharzen, Wachsen und Fluorkohlenwasserstoffharz-oberflächenaktiven Mitteln, wobei die Menge des Griffverbesserers im Bereich von 0,05-15 Gewichtsteilen, bezogen auf 100 Gewichtsteile der Zusammensetzung, liegt, die Zusammensetzung nach dem Aushärten eine Glasübergangstemperatur von -150 bis 20 °C und eine Dehnung von 30 bis 1000% aufweist; und eine auf der Zusammensetzungsschicht gebildete adhäsive Schicht umfaßt.

**37.** Laminat nach Anspruch 36, wobei mindestens eine Schicht von bedruckten, metallisierten und gefärbten Schichten zwischen dem weichen Überzugsfilm und der adhäsiven Schicht angeordnet ist.

**Revendications**

1. Composition pour films revêtus souples ayant une impression tactile souple comprenant, comme composants essentiels, (a) un acrylate d'uréthane ayant un poids moléculaire de 500-50 000 ; et (b) un améliorant tactile choisi parmi les résines de silicone, les cires et les tensioactifs résines fluorocarbonées, la quantité dudit améliorant tactile étant comprise dans l'intervalle de 0,05-15 parties en poids par rapport à 100 parties en poids de la composition, la composition ayant une température de transition vitreuse de -150 à 20 °C et un allongement de 30 à 1000 % après réticulation.

2. Composition selon la revendication 1, où ledit acrylate d'uréthane comprend un composé isocyanate comprenant au moins deux groupes isocyanates, un composé contenant 1-4 groupes hydroxyles et un composé contenant 1-2 groupes hydroxyles et 1-5 groupes polymérisables par voie radicalaire.

3. Composition selon la revendication 1, où ledit acrylate d'uréthane comprend un composé contenant au moins deux groupes isocyanates et un composé contenant 1-4 groupes hydroxyles et 1-5 groupes polymérisables par voie radicalaire.

4. Composition selon l'une quelconque des revendications 1 à 3, où la teneur en ledit acrylate d'uréthane se situe dans l'intervalle de 20-95 % en poids.

5. Composition selon l'une quelconque des revendications 1 à 4, qui contient un ou deux monomères acryliques ou plus, chacun ayant au moins un groupe polymérisable par voie radicalaire par molécule.

6. Composition selon l'une quelconque des revendications 1 à 5, qui contient en plus un ou deux composés uréthanes ou plus.

7. Composition selon l'une quelconque des revendications 1 à 6, où le composé isocyanate formant une partie dudit acrylate d'uréthane est représentée par la formule suivante (I) ou (II) :

$OCNR_1NCO$ (I)

ou

$R_2\text{-}(NCO)_3$ (II)

où $R_1$ est un groupe hydrocarbure ayant 4-14 atomes de carbone et $R_2$ est un groupe ayant un squelette isocyanurate de triméthylolpropane.

8. Film déposé souple ayant une impression tactile souple comprenant : un film support ; et une couche de résine formée sur le film support, la couche de résine est réticulée par irradiation d'une composition comprenant comme composants essentiels, (a) un acrylate d'uréthane ayant un poids moléculaire de 500-50 000 ; et (b) un améliorant tactile choisi parmi les résines de silicone, les cires et les tensioactifs résines fluorocarbonées, la quantité dudit améliorant tactile étant comprise dans l'intervalle de 0,05-15 parties en poids par rapport à 100 parties en poids de la composition, la composition ayant une température de transition vitreuse de -150 à 20 °C et un allongement de 30 à 1000 % après réticulation.

9. Film déposé souple selon la revendication 8, où ledit acrylate d'uréthane comprend un composé isocyanate contenant au moins deux groupes isocyanates, un composé contenant 1-4 groupes hydroxyles et un composé contenant 1-2 groupes hydroxyles et 1-5 groupes polymérisables par voie radicalaire.

10. Film déposé souple selon la revendication 8, où ledit acrylate d'uréthane comprend un composé contenant au moins deux groupes isocyanates et un composé contenant 1-4 groupes hydroxyles et 1-5 groupes polymérisables par voie radicalaire.

11. Film déposé souple selon l'une quelconque des revendications 8 à 10, où la teneur en ledit acrylate d'uréthane se trouve dans l'intervalle de 20-95 % en poids.

12. Film déposé souple selon l'une quelconque des revendications 8 à 11, qui contient un ou deux monomères acryliques ou plus, chacun ayant au moins un groupe polymérisable par voie radicalaire par molécule.

13. Film déposé souple selon l'une quelconque des revendications 8 à 12, où ladite composition contient en outre un ou deux composés uréthanes ou plus.

14. Film déposé souple selon l'une quelconque des revendications 8 à 13, où, après réticulation, la couche de résine a de fines irrégularités à sa surface et une rugosité de surface dans l'intervalle de 0,2-100 µm exprimée en termes de rugosité moyenne par rapport à la ligne centrale Ra.

15. Film déposé souple selon l'une quelconque des revendications 8 à 14, où ledit film support a une couche colorée.

16. Film déposé souple selon l'une quelconque des revendications 8 à 15, où ledit film support a une couche métallisée.

17. Film déposé souple selon l'une quelconque des revendications 8 à 16, où ledit film support est imprimé.

18. Film déposé souple selon l'une quelconque des revendications 8 à 17, où ledit film support est fourni avec une couche adhésive à sa face dorsale.

19. Procédé de production de films déposés souples ayant une impression tactile souple, caractérisé par :
    formation entre un film support et un film de stratification d'une couche de composition comprenant, comme composants essentiels, (a) un acrylate d'uréthane ayant un poids moléculaire de 500-50 000 ; et (b) un améliorant tactile choisi parmi les résines de silicone, les cires et les tensioactifs résines fluorocarbonées, la quantité dudit améliorant tactile étant comprise dans l'intervalle de 0,05-15 parties en poids par rapport à 100 parties en poids de la composition, la composition ayant une température de transition vitreuse de -150 à 20 °C et un allongement de 30 à 1000 % après réticulation.
    irradiation du stratifié film de stratification/couche de composition/film support ainsi obtenu par radiation ionisante pour réticuler la composition sur ledit stratifié ; et
    décollement seulement dudit film de stratification dudit stratifié.

20. Procédé selon la revendication 19, caractérisé en plaçant ledit film support et le film de stratification ensemble entre une paires de cylindres ; porter les deux films sous pression tout en alimentant ladite composition entre eux pour former ladite couche de composition entre eux et on force la quantité en excès de ladite composition alimentée sous l'effet de la pression qui sert à presser les films entre eux par lesdits cylindres, ce qui forme une masse de ladite composition au bord entre lesdits deux films à l'entrée d'un jeu défini entre lesdits cylindres, qui empêche l'inclusion des bulles d'air dans ladite couche de composition formée entre les deux films.

21. Procédé selon la revendication 19 ou 20, où ledit film stratifié est traité avec un améliorant tactile.

22. Procédé selon l'une quelconque des revendications 19 à 21, où ledit stratifié est irradié deux fois ou plus par une radiation ionisante.

23. Procédé selon l'une quelconque des revendications 19 à 22, où ledit stratifié est irradié successivement avec plusieurs doses de radiations ionisantes du côté du film support.

24. Procédé selon l'une quelconque des revendications 19 à 23, où l'irradiation successive dudit stratifié avec plusieurs doses de radiations ionisantes est réalisée par :
    irradiation dudit stratifié avec (a) une première dose de radiations ionisantes du côté du film de stratification et ensuite (b) une seconde dose de radiation ionisante du côté du film support.

25. Procédé selon l'une quelconque des revendications 19 à 23, où l'irradiation successive dudit stratifié avec plusieurs doses de radiations ionisantes est réalisée par :
    irradiation dudit stratifié avec (a) une première dose de radiations ionisantes du côté du film

support et ensuite (b) une seconde dose de radiation ionisante du côté du film de stratification.

**26.** Procédé selon l'une quelconque des revendications 19 à 25, où l'irradiation successive dudit stratifié avec plusieurs doses de radiations ionisantes est réalisée par :
irradiation dudit stratifié avec une première dose de radiations ionisantes depuis le film de stratification ou du côté du film support jusqu'à ce que ladite couche de composition ait une fraction de gel réduite à 90 % ou moins et ensuite (b) une seconde dose de radiations ionisantes du côté du film de stratification ou du film support pour rendre ladite couche de composition sensiblement parfaite.

**27.** Procédé selon l'une quelconque des revendications 19 à 26, où ladite radiation ionisante est constituée de faisceaux d'électrons ou de rayons ultraviolets.

**28.** Procédé selon l'une quelconque des revendications 19 à 27, où ledit film de stratification comprend un film lissé.

**29.** Procédé selon l'une quelconque des revendications 19 à 28, où ledit film de stratification comprend un film mat ayant de fines irrégularités à sa surface.

**30.** Procédé selon l'une quelconque des revendications 19 à 29, où ledit film de stratification a de fines irrégularités à sa surface et une rugosité de surface dans l'intervalle de 0,2-100 µm exprimée en termes de rugosité moyenne par rapport à la ligne centrale Ra.

**31.** Procédé selon l'une quelconque des revendications 19 à 30, où ledit film support a une couche colorée.

**32.** Procédé selon l'une quelconque des revendications 19 à 31, où ledit film support a une couche métallisée.

**33.** Procédé selon l'une quelconque des revendications 19 à 32, où ledit film support est imprimé.

**34.** Procédé selon l'une quelconque des revendications 19 à 33, où ledit film est muni d'une couche adhésive à sa face dorsale.

**35.** Procédé de production de films déposés souples ayant une impression tactile souple, caractérisé par :
formation sur un film support d'une couche de composition comprenant comme composants essentiels, (a) un acrylate d'uréthane ayant un poids moléculaire de 500-50 000 ; et (b) un améliorant tactile choisi parmi les résines de silicone, les cires et les tensioactifs résines fluorocarbonées, la quantité dudit améliorant tactile étant comprise dans l'intervalle de 0,05-15 parties en poids par rapport à 100 parties en poids de la composition, la composition ayant une température de transition vitreuse de -150 à 20 °C et un allongement de 30 à 1 000 % après réticulation ; et
application de pression sur le stratifié ainsi formé du côté de ladite couche de composition avec un cylindre de formation et irradiation dudit stratifié par une radiation ionisante, ce qui permet de faire réticuler la couche de composition.

**36.** Stratifié pour un procédé selon l'une quelconque des revendications 19 à 35, où le stratifié comprend :
un film de stratification ; et
une couche de composition formée sur le film de stratification, la couche de composition comprenant un film déposé souple décollable comprenant, comme composants essentiels, (a) un acrylate d'uréthane ayant un poids moléculaire de 500-50 000; et (b) un améliorant tactile choisi parmi les résines de silicone, les cires et les tensioactifs résines fluorocarbonées, la quantité dudit améliorant tactile étant comprise dans l'intervalle de 0,05-15 parties en poids par rapport à 100 parties en poids de la composition, la composition ayant une température de transition vitreuse de -150 à 20 °C et un allongement de 30 à 1 000 % après réticulation ; et une couche adhésive formée sur la couche de composition.

**37.** Stratifié selon la revendication 36, où au moins une couche choisie parmi des couches imprimées, métallisées et colorées est interposée entre ledit film déposé souple et ladite couche adhésive.

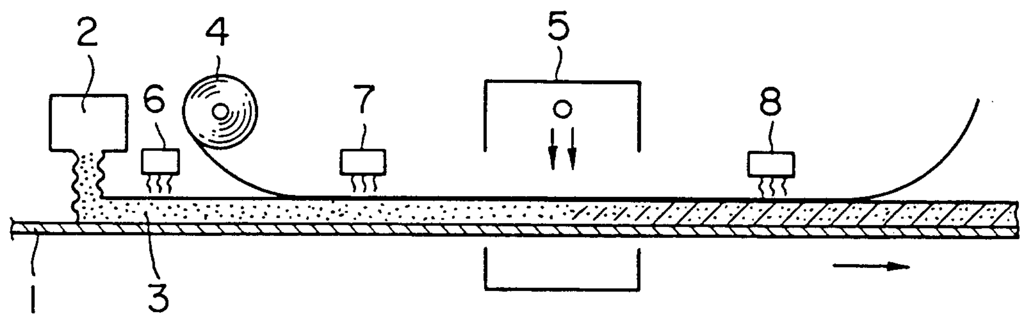


FIG. 1

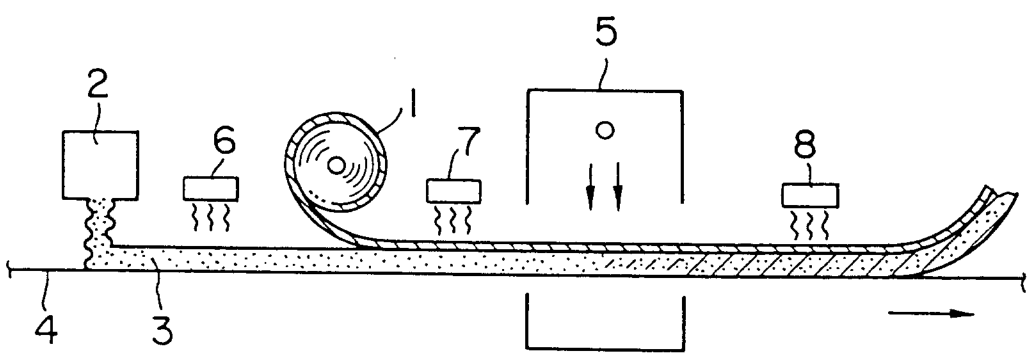


FIG. 2

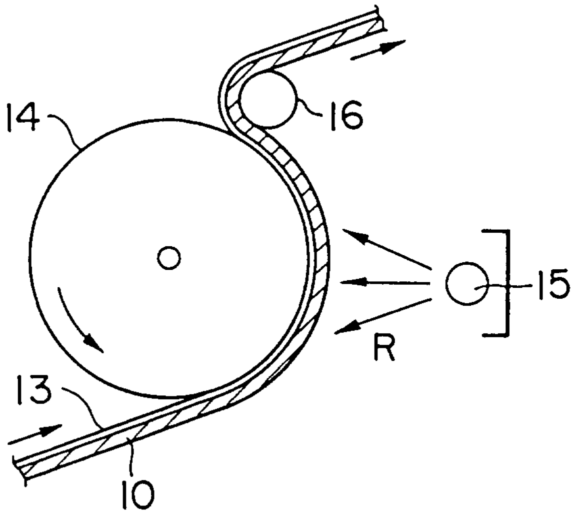


FIG. 3

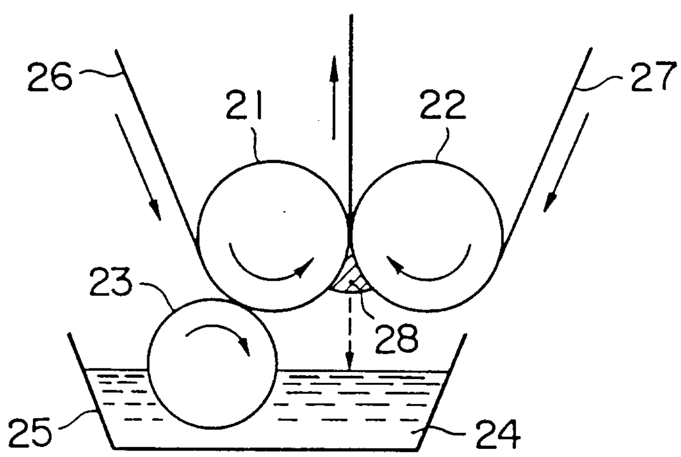


FIG. 4